# EUROPEAN PATENT APPLICATION

(11) **EP 0 789 988 A2**
(43) Date of publication of application: **20.08.1997**
(21) Application number: 97102142.3
(22) Date of filing: 11.02.1997
(51) Int. Cl.: A01C 11/02

(54) **Multiple furrow transplanting method for seedlings for transplantation and multiple furrow seedling transplanting machine**

(30) Priority: 14.02.1996 JP 49658/96; 09.04.1996 JP 111093/96
(71) Applicant: Circle Tekko Co., Ltd., Takikawa-shi, Hokkaido (JP)
(72) Inventor: Mikawa, Isao c/o Circle Tekko Co., Ltd., Takikawa-shi, Hokkaido (JP); Kaji, Masayuki c/o Circle Tekko Co., Ltd., Takikawa-shi, Hokkaido (JP); Kishida, Yoshitake c/o Circle Tekko Co., Ltd., Takikawa-shi, Hokkaido (JP); Tamao, Takahito c/o Circle Tekko Co., Ltd., Takikawa-shi, Hokkaido (JP); Ito, Yasuaki c/o Circle Tekko Co., Ltd., Takikawa-shi, Hokkaido (JP); Watanabe, Kazushi c/o Circle Tekko Co., Ltd., Takikawa-shi, Hokkaido (JP)
(74) Representative: Hering, Hartmut, Dipl.-Ing.

(57) **Abstract**

Seedlings (Pa) for transplantation received by a single seedling receiving mechanism (37) are transported toward a distributing transferring mechanism (38). During the transportation, the seedlings (Pa) for transplantation are detected by a sensor (S2, S2') serving as detection means, and a distributing member (38b) is controlled in response to the detection so that the seedlings (Pa) for transplantation are distributed by the distributing member (38b) and fed separately to a pair of seedling planting mechanisms (B, B'). The seedlings (Pa) for transplantation are then planted to corresponding furrows by the seedling planting mechanisms (B, B'). Preferably, the seedlings (Pa) for transplantation received by a single seedling receiving mechanism (37) are selectively separated into good seedlings and defective seedlings, and only the good seedlings are fed to the distributing transferring mechanism (38) and the seedling planting mechanism (B, B').

## Description

This invention relates to a multiple furrow transplanting method for seedlings for transplantation wherein seedlings for transplantation with or without dirt obtained by predetermined seedling raising management are successively transplanted at fixed distances simultaneously in two or more furrows to an object field, and a multiple furrow seedling transplanting machine suitable for use with the multiple transplanting method for seedlings for transplantation.

A seedling transplanting method for seedlings for transplantation wherein seedlings to be planted are supplied into a seedling planting mechanism via a seedling receiving mechanism and automatically planted at fixed distances to an object field and a multiple furrow seedling transplanting machine used to carry out the method are already known. In the known seedling transplanting method for seedlings for transplantation and multiple furrow seedling transplanting machine, a planting unit is employed wherein such seedling accepting mechanisms and seedling planting mechanisms as mentioned above are provided in a one-by-one corresponding relationship in sets.

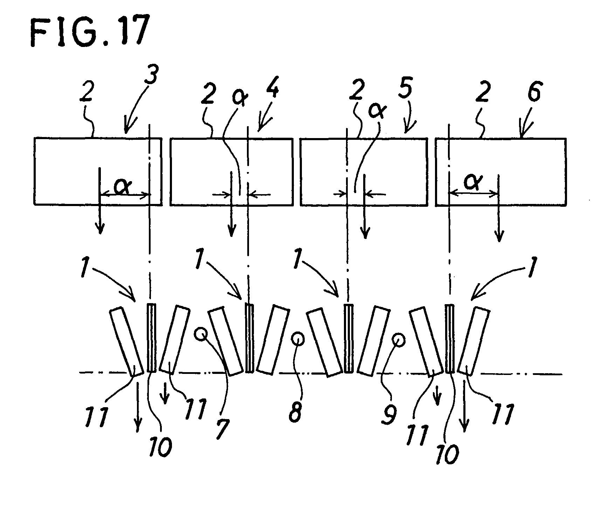

FIG. 17 shows a general construction of a seedling transplanting machine for four furrows. Referring to FIG. 17, the seedling transplanting machine shown includes four planting units 3 to 6 each including a seedling planting mechanism 1 and a seedling receiving mechanism 2 disposed above the seedling planting mechanism 1.

The seedling planting mechanism 1 includes a pair of pressing down wheels 11 provided on a seedling planting wheel 10 such that, after a seedling for transplantation supplied from the seedling receiving mechanism 2 is discharged to a furrow from the seedling planting wheel 10, the dirt around the seedling is pressed down by the pressing down wheels 11 to automatically perform transplantation of the seedling.

From among the four planting units 3 to 6, the planting units 3 and 6 on the opposite outer sides are supported for pivotal motion on support shafts 7 and 9 disposed between the planting units 3 and 6 and the planting units 4 and 5 located on the inner sides, respectively. Meanwhile, the planting units 4 and 5 on the inner sides are supported for pivotal motion on a central support shaft 8.

The seedling receiving mechanism 2 of each of the planting units 3 to 6 separates individual seedlings for transplantation from a connected seedling group in which a large number of seedlings for transplantation are connected to each other, and supplies the separated seedlings one by one to the seedling planting mechanism 1. Consequently, the seedling receiving mechanism 2 is comparatively complicated in construction and must be formed with a width larger than an ordinary distance between furrows (50 to 60 cm).

Therefore, where the planting units 3 to 6 are constructed such that the seedling planting mechanisms 1 are located in a juxtaposed relationship in accordance with the pitch corresponding to an ordinary distance between furrows, the displacement or offset α of the seedling receiving mechanism 2 toward the outer side with respect to the seedling planting mechanism 1 must be set such that it is larger with the outer side planting units than with the inner side planting units.

In this manner, in order to allow simultaneous transplantation of seedlings to four furrows, four planting units are conventionally required. More universally, a number of planting units equal to the number of furrows to which seedlings are to be transplanted simultaneously must be mounted in a juxtaposed relationship on a transplanting machine. Accordingly, a number of workers equal to the number of planting units are required to supplement seedlings for transplantation to seedling receiving mechanisms or seedling supply mechanisms located in the preceding stage to the seedling accepting mechanisms.

Particularly, since one seedling receiving mechanism is provided for each of a plurality of seedling planting mechanisms, the entire seedling transplanting machine is complicated in structure, and this makes a factor of a high cost.

Meanwhile, in order to plant a seedling for transplantation to a furrow in a most desirable condition in which it stands uprightly, it is important that the pressing down forces of two pressing down wheels on the opposite side of each seedling planting wheel be equal to each other.

However, as the displacement α of a seedling receiving mechanism toward the outer side with respect to a seedling planting mechanism increases, the load applied to the outer side one of the two pressing down wheels becomes higher than the load applied to the inner side pressing down wheel, resulting in difference between the pressing down forces. As a result, a seedling for transplantation is planted in a posture inclined forwardly, backwardly, leftwardly or rightwardly.

Further, while seedlings for transplantation are obtained by predetermined seedling raising management, a defective seedling with which, for example, leaves are not grown satisfactorily is sometimes included in such seedlings for transplantation, and if the defective seedling is not removed, then seedlings may not be planted regularly to a furrow.

It is an object of the present invention to provide a multiple furrow seedling transplanting machine which includes a reduced number of seedling receiving mechanisms or seedling supply mechanisms disposed at the preceding stage to the seedling receiving mechanisms and is simplified in structure and reduced in production cost and also in number of workers and besides can transplant seedlings effectively and a multiple furrow transplanting method for seedlings for transplantation which allows such construction of the multiple furrow seedling transplanting machine.

It is another object of the present invention to provide a multiple furrow transplanting method for seedlings for transplantation and a multiple furrow seedling transplanting machine wherein an equal load is applied to a pair of pressing down wheels on the opposite sides of a seedling planting wheel so that a seedling for transplantation can be planted uprightly without being inclined.

It is a further object of the present invention to provide a multiple furrow transplanting method for seedlings for transplantation and a multiple furrow seedling transplanting machine wherein only good seedlings can be fed to seedling planting mechanisms so that they are transplanted at predetermined distances in a plurality of furrows.

In order to attain the objects described above, according to an aspect of the present invention, there is provided a multiple furrow transplanting method for seedlings for transplantation, which is constructed such that seedlings for transplantation received by a single seedling receiving mechanism can be selectively distributed and supplied to a pair of seedling planting mechanisms. More particularly, there is provided a multiple furrow transplanting method for seedlings for transplantation, characterized in that seedlings for transplantation received by a single seedling receiving mechanism are transported toward a distributing transferring mechanism, and during the transportation, the seedlings for transplantation are detected by a sensor serving as detection means and a distributing member is controlled in response to the detection so that the seedlings for transplantation are distributed by the distributing member and fed separately to a pair of seedling planting mechanisms, by which the seedlings for transplantation are planted to corresponding furrows.

With the multiple furrow transplanting method for seedlings for transplantation, seedlings for transplantation received by the single seedling receiving mechanism can be selectively distributed and supplied to the pair of seedling planting mechanisms, by which they can be planted to corresponding furrows. Consequently, the multiple furrow transplanting method for seedlings for transplantation is advantageous in that, when compared with the conventional multiple furrow transplanting method described hereinabove, the number of seedling receiving mechanisms can be reduced, and the structure can be simplified and the production cost and the number of required workers can be reduced as much.

According to another aspect of the present invention, before seedlings for transplantation received by a single seedling receiving mechanism are selectively distributed and supplied to a pair of seedling planting mechanisms, selection of the seedlings for transplantation is performed and resulting defective seedlings are abandoned to the outside of the machine while only good seedlings are fed to the seedling planting mechanism so that they may be planted actually. More particularly, there is provided a multiple furrow transplanting method for seedlings for transplantation, characterized in that seedlings for transplantation received by a single seedling receiving mechanism are selectively separated into good seedlings and defective seedlings and only the good seedlings are transported toward a distributing transferring mechanism, and during the transportation, the good seedlings for transplantation are detected by a sensor serving as detection means and a distributing member is controlled in response to the detection so that the good seedlings for transplantation are distributed by the distributing member and fed separately to a pair of seedling planting mechanisms, by which the good seedlings for transplantation are planted to corresponding furrows.

With the multiple furrow transplanting method for seedlings for transplantation, before seedlings for transplantation received by the single seedling receiving mechanism are selectively distributed and supplied to the pair of seedling planting mechanisms, selection of the seedlings for transplantation is performed and resulting defective seedlings are abandoned to the outside of the machine while only good seedlings are fed to the seedling planting mechanism so that they may be planted actually. Consequently, the multiple furrow transplanting method for seedlings for transplantation is advantageous, in addition to the advantage of the multiple furrow transplanting method for seedlings for transplantation of the first aspect of the present invention, in that only good seedlings can be transplanted regularly at predetermined distances in a plurality of furrows.

Preferably, the multiple furrow transplanting method for seedlings for transplantation according to the first or second aspect of the present invention is constructed such that the seedlings for transplantation are transported to the distributing transferring mechanism through a seedling selecting variable transport speed section and a seedling contacting constant transport speed section of the seedling receiving mechanism, in which the seedlings for transplantation are selectively separated into good seedlings and defective seedlings by the seedling selecting variable transport speed section and then the crowding degree of the seedlings for transplantation in the seedling contacting constant transport speed section is adjusted so as to be normally fixed by controlling the transport speed of the seedlings for transplantation in the seedling selecting variable transport speed section.

According to a further aspect of the present invention, the multiple furrow transplanting method for seedlings for transplantation according to the first aspect of the present invention is suitably carried out by a multiple furrow seedling transplanting machine, characterized in that it comprises a single seedling receiving mechanism, a pair of seedling planting mechanisms, a distributing transferring mechanism interposed between the seedling receiving mechanism and the seedling planting mechanisms, a distributing member for selectively distributing the seedlings for transplantation being transported by the distributing transferring mechanism to the seedling planting mechanisms, and a sensor serving as detection means for detecting the seedlings for transplantation being transported by the distributing transferring mechanism to control the distributing member.

Preferably, the seedling receiving mechanism has a function of selectively separating the seedlings for transplantation into good seedlings and defective seedlings. In this instance, preferably the seedling receiving mechanism includes a seedling selecting variable transport speed section having a function of selectively separating the seedlings for transplantation into good seedlings and defective seedlings, and a seedling contacting constant transport speed section.

Preferably, the seedling receiving mechanism and the distributing transferring mechanism as well as, where a seedling supply mechanism for supplying seedlings for transplantation is provided, the seedling supply mechanism are disposed such that the centers of gravity thereof are positioned in the middle between the seedling planting mechanisms. Here, since the loads of the mechanisms mentioned above are all applied to the middle between the seedling planting mechanisms, equal loads are applied to a pair of pressing down wheels on the opposite side of each of seedling planting wheels of the seedling planting mechanisms, and consequently, the dirt around a seedling for transplantation discharged to a furrow can be pressed down equally by the pressing down wheels. As a result, the seedling for transplantation can be transplanted in an uprightly erected, good and ideal condition without being inclined.

The above and other objects, features and advantages of the present invention will become apparent from the following description and the appended claims, taken in conjunction with the accompanying drawings in which like parts or elements are denoted by like reference characters.
FIG. 1 is a side elevational view of a multiple furrow seedling transplanting machine showing a preferred embodiment of the present invention;
FIG. 2 is a side elevational view, partly in section, of the multiple furrow seedling transplanting machine of FIG. 1;
FIG. 3 is a plan view of the multiple furrow seedling transplanting machine of FIG. 1 showing a movable frame in section;
FIG. 4 is a rear elevational view of a planting unit of the multiple furrow seedling transplanting machine of FIG. 1;
FIG. 5 is a rear elevational view showing the planting unit of FIG. 4 with a seedling transplanting mechanism omitted;
FIG. 6 is a side elevational view of the planting unit shown in FIG. 5;
FIG. 7 is a front elevational view of a distributing transferring mechanism in a seedling distributing mechanism of the multiple furrow seedling transplanting machine of FIG. 1;
FIG. 8 is a plan view of a seedling supply mechanism of the multiple furrow seedling transplanting machine of FIG. 1;
FIG. 9 is a side elevational view of a seedling receiving mechanism of the seedling distributing mechanism of FIG. 7;
FIG. 10 is a plan view of the seedling receiving mechanism shown in FIG. 9;
FIG. 11 is a front elevational view of the seedling receiving mechanism shown in FIG. 9;
FIG. 12 is a side elevational view of another multiple furrow seedling transplanting machine showing another preferred embodiment of the present invention;
FIG. 13 is a plan view of the multiple furrow seedling transplanting machine of FIG. 12 showing a movable frame in section;
FIG. 14 is a side elevational view showing a planting unit of the multiple furrow seedling transplanting machine of FIG. 12 with a seedling planting mechanism omitted;
FIG. 15 is a rear elevational view of the planting unit shown in FIG. 14;
FIG. 16 is a partial enlarged view of a seedling distributing mechanism of the multiple furrow seedling transplanting machine of FIG. 12; and
FIG. 17 is a front elevational view showing a general construction of a conventional multiple furrow seedling transplanting machine.

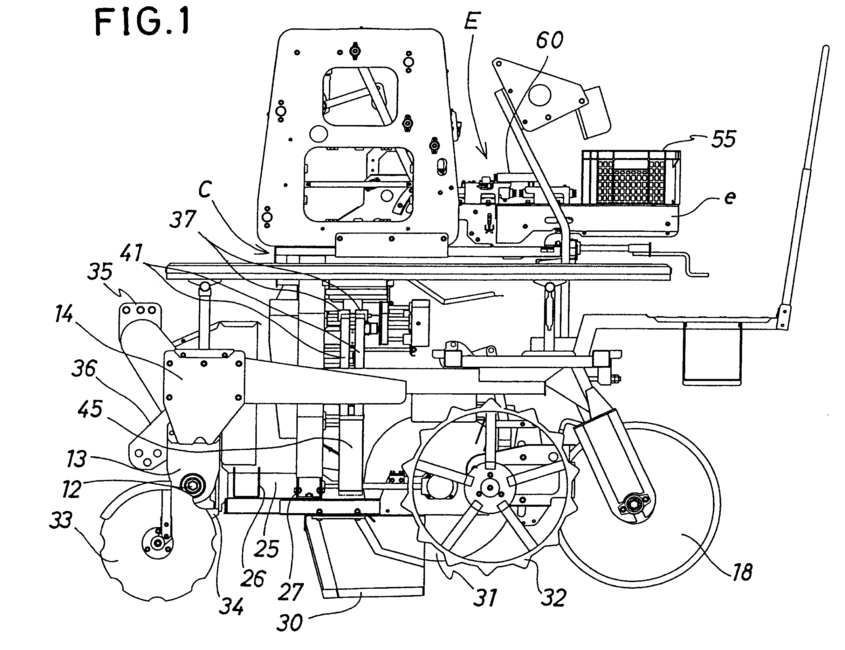

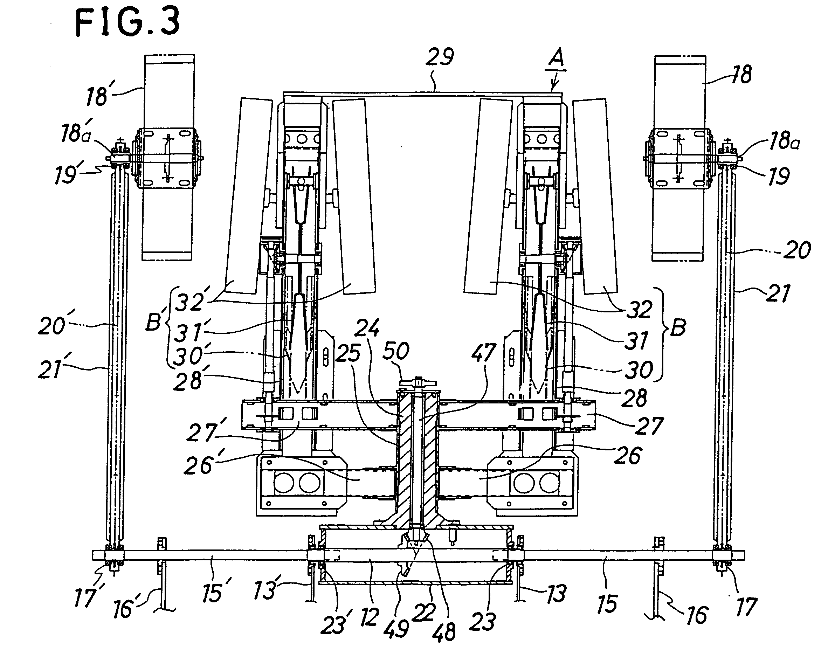

Referring first to FIGS. 1 to 3, there is shown a multiple furrow seedling transplanting machine to which the present invention is applied.

The multiple furrow seedling transplanting machine includes a horizontally extending traction driving shaft 12 mounted in a suspended condition on a transplanting machine body frame 14 by means of a pair of brackets 13 and 13', and a pair of horizontally extending left and right connection shafts 15 and 15' having inner ends connected to the left and right ends of the traction driving shaft 12 and supported at portions adjacent the outer ends thereof in a suspended condition on the transplanting machine body frame 14 by means of another pair of brackets 16 and 16', respectively. A pair of sprocket wheels 17 and 17' are secured to the outer ends of the left and right connection shafts 15 and 15', respectively.

A pair of chains 20 and 20' extend between and around the sprocket wheels 17 and 17' and another pair of sprocket wheels 19 and 19' secured to drive shafts 18a and 18'a of driving wheels 18 and 18' located at rear portions of the multiple furrow seedling transplanting machine so that driving forces of the driving wheels 18 and 18' may be transmitted to rotate the traction driving shaft 12. A pair of chain cases 21 and 21' cover and protect the chains 20 and 20' respectively.

A cover tube 22 is fitted around a central portion of the traction driving shaft 12 with a pair of bearings 23 and 23' interposed therebetween. A support shaft member 24 is secured at the front end thereof to the center of the cover tube 22 and extends rearwardly such that it exhibits a T-shape together with the cover tube 22. A rotatable outer tube 25 is fitted on the support shaft member 24.

A movable frame A is mounted in a leftwardly and rightwardly symmetrically relationship on the support shaft member 24. The movable frame A includes a pair of front side left and right brackets 26 and 26' secured to an outer periphery of the rotatable outer tube 25, a pair of rear side left and right bases 27 and 27', a pair of left and right mounting frames 28 and 28' having front end portions secured to the front side left and right brackets 26, 26' and rear side left and right bases 27, 27', respectively, and extending rearwardly, and a connection member 29 interconnecting the rear ends of the left and right mounting frames 28 and 28'.

A pair of seedling planting mechanisms B and B' are mounted on the movable frame A in a leftwardly and rightwardly symmetrical relationship with respect to the support shaft member 24. Each of the seedling planting mechanisms B and B' includes an opener 30 or 30', a seedling planting wheel 31 or 31', and a pair of pressing down wheels 32 or 32', which are successively mounted from the front side to the rear side on the left and right mounting frames 28 and 28', respectively. The pressing down wheels 32 and 32' are located symmetrically on the opposite sides of the seedling planting wheels 31 and 31', respectively.

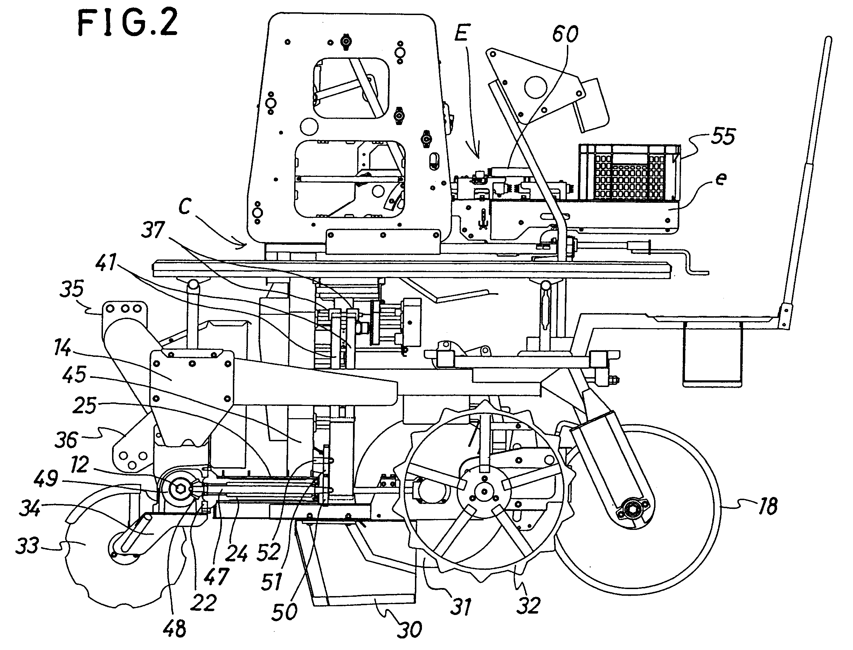

A rolling coulter 33 is mounted in a suspended condition on the transplanting machine body frame 14 and supported for rotation on a support leg 34. Further, a pair of connection members 35 and 36 for connecting the multiple furrow seedling transplanting machine to a traction car such as a tractor are provided in a forwardly extending condition on the transplanting machine body frame 14 as seen in FIGS. 1 and 2.

When the multiple furrow seedling transplanting machine is drawn by a traction car, if the seedling planting mechanism B or B' detects a convex or a concave of an object field, then the movable frame A is pivoted upwardly or downwardly around the traction driving shaft 12 and pivoted leftwardly or rightwardly around the support shaft member 24 in accordance with the convex or concave of the object field.

A planting unit C is mounted on the rear side left and right bases 27 and 27'.

The planting unit C is composed of the two seedling planting mechanisms B and B', and a seedling distributing mechanism D and a seedling supply mechanism E located in an integrated relationship above the seedling planting mechanisms B and B'. The seedling distributing mechanism D and the seedling supply mechanism E will be described in detail below.

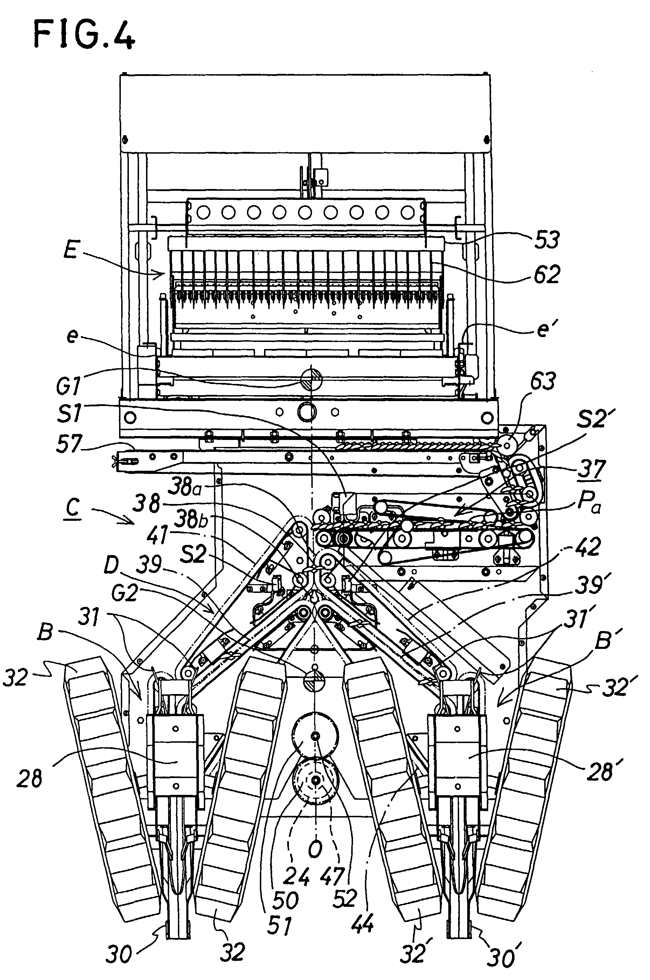

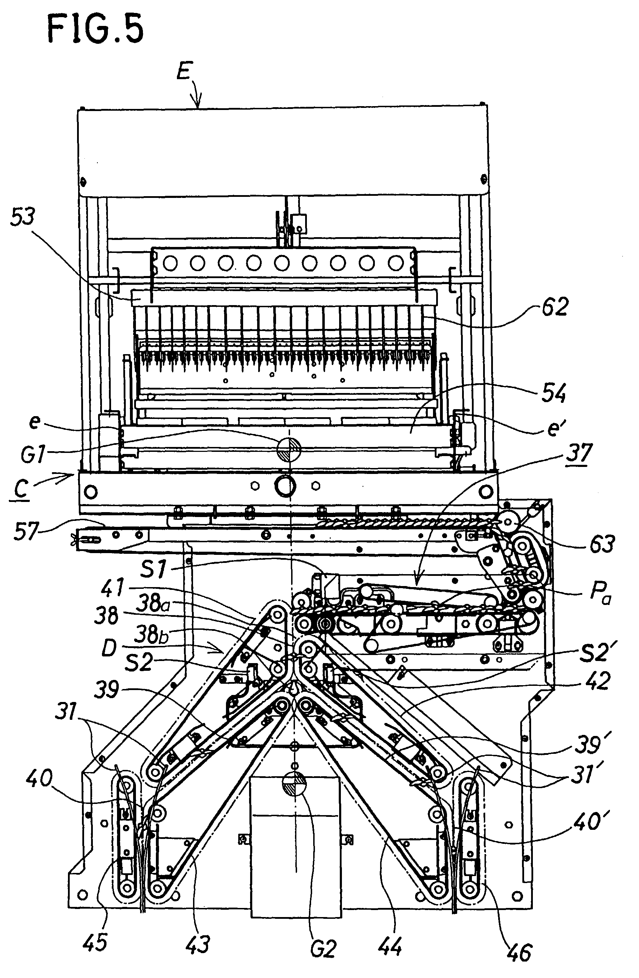

Referring to FIGS. 4 and 5, the seedling distributing mechanism D includes ① a seedling receiving mechanism 37, ② a distributing transferring mechanism 38 for distributing seedlings Pa for transplantation fed from the seedling receiving mechanism 37 leftwardly and rightwardly, ③ a pair of separately transferring mechanisms 39 and 39' for transferring the thus distributed seedlings Pa for transplantation separately from each other, and ④ a pair of feeding transferring mechanisms 40 and 40' for feeding the thus transferred seedlings Pa for transplantation to the seedling planting wheels 31 and 31' of the seedling planting mechanisms B and B', respectively.

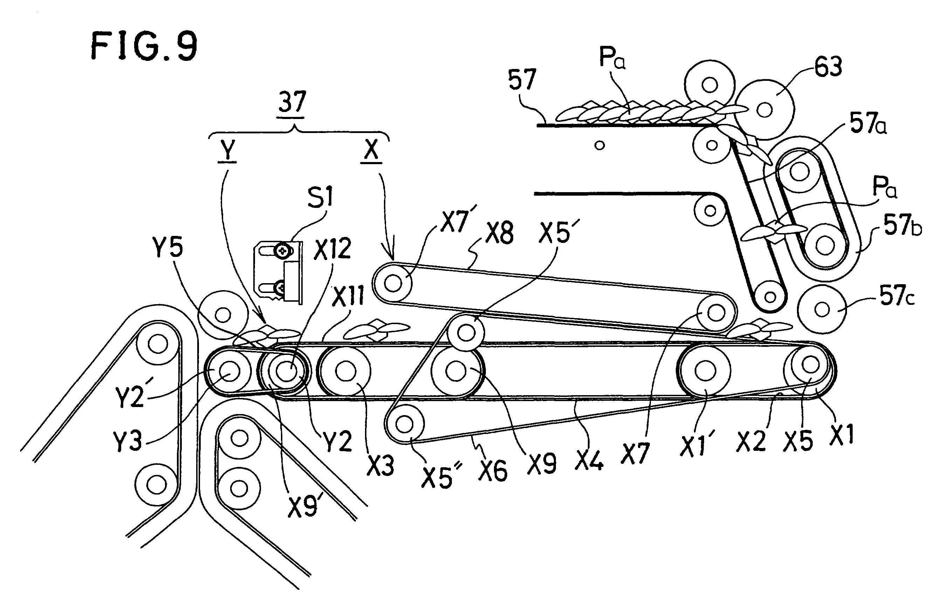

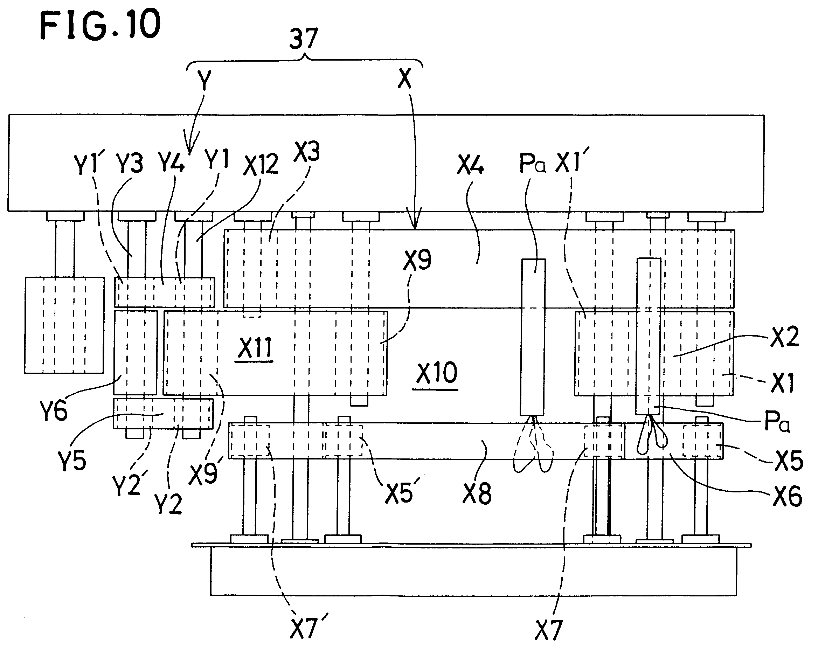

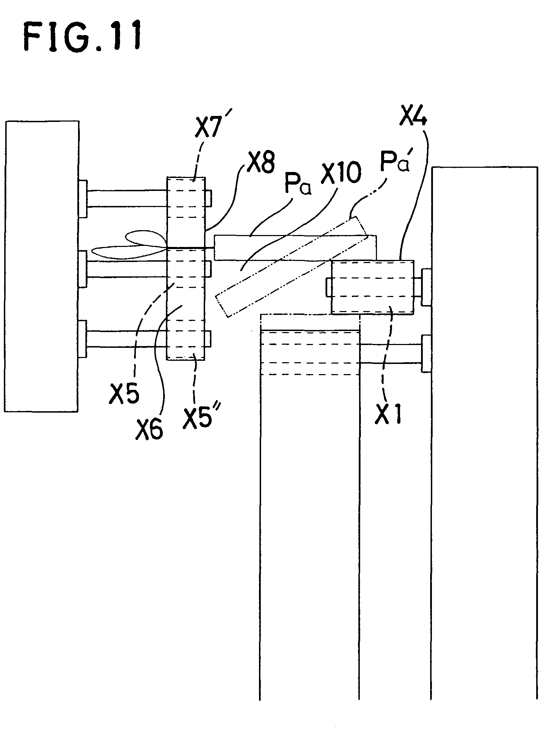

The seedling receiving mechanism 37 of the seedling distributing mechanism D will first be described in detail principally with reference to FIGS. 9 to 11.

The seedling receiving mechanism 37 includes a seedling selecting variable transport speed section X and a seedling contacting constant transport speed section Y.

The seedling selecting variable transport speed section X includes ① a belt X2 extending between and around a pair of pulleys X1 and X1', ② a root part supporting belt X4 extending between and around the pulley X1 and a further pulley X3, ③ a leaf part supporting belt X6 extending between and around three pulleys X5, X5' and X5'' disposed at three points or apexes by which a predetermined triangle is defined, ④ a leaf part holding belt X8 extending between and around a pair of pulleys X7 and X7' and contacting in an opposing relationship with upper and lower portions of the leaf part supporting belt X6, and ⑤ a seedling aligning belt X11 extending between and around a pair of pulleys X9 and X9' and cooperating with the belt X2 to define therebetween a dropping void X10.

The belts X2, X4, X6, X8 and X11 have an equal transport speed, which is set higher than a transport speed of the seedling supply mechanism E.

In the seedling selecting variable transport speed section X, seedlings Pa for transplantation are received from the seedling supply mechanism E and placed onto the root part supporting belt X4, leaf part supporting belt X6 and belt X2, and then selection of them is performed while they are transported to the sending out end of the belt X2.

In particular, if a seedling Pa for transplantation is a sound good seedling for transplantation, then it is supported at the root part thereof on the root part supporting belt X4 while it is held at the leaf part thereof between the leaf part supporting belt X6 and the leaf part holding belt X8, and in this state, the seedling Pa for transplantation passes above the dropping void X10 and moves to the seedling aligning belt X11, on which it is aligned with other sound good seedlings for transplantation transported there formerly. However, if the seedling Pa for transplantation is a defective P' which has no leaf part, then since it is not supported on the leaf part supporting belt X6, it drops into the dropping void X10 and abandoned to the outside.

Meanwhile, the seedling contacting constant transport speed section Y includes ① a pair of seedling re-arranging belts Y4 and Y5 extending between and around a pair of free pulleys Y1 and Y2 loosely fitted on a shaft X12 to which the pulley X9' is secured and another pair of pulleys Y1' and Y2' secured to a shaft Y3 located forwardly of the free pulleys Y1 and Y2, respectively, and ② a roller Y6 secured to the shaft Y3.

The seedling rearranging belts Y4 and Y5 and the roller Y6 operate in an interlocking relationship with the seedling planting mechanisms B and B' in order to supply seedlings Pa for transplantation to the seedling planting mechanisms B and B' in a predetermined condition, and have a fixed transport speed. This transport speed is set lower than the transport speeds of the seedling supply mechanism E and the seedling selecting variable transport speed section X.

Accordingly, if seedlings Pa for transplantation are fed successively, they usually contact closely with each other in a comparatively crowding state on the seedling rearranging belts Y4 and Y5 and the roller Y6. However, if such defective P' to be abandoned to the outside of the multiple furrow seedling transplanting machine successively appear as described above, then a space appears between seedlings Pa for transplantation.

A sensor S1 serving as a contactless detection element is located between a transport conveyor 57 of the seedling supply mechanism E which will be hereinafter described and the seedling re-arranging belts Y4 and Y5.

The sensor S1 detects a crowding degree of seedlings Pa for transplantation on the seedling re-arranging belts Y4 and Y5. When the distance between the seedlings Pa for transplantation is comparatively large, the transport speeds of the belts of the seedling selecting variable transport speed section X and the transport conveyor 57 of the seedling supply mechanism E are increased, but when the distance becomes short and the seedlings Pa for transplantation appear closely with each other, the transport speeds are returned to the respective original transport speeds.

Consequently, a suitable number of seedlings Pa for transplantation are normally present on the seedling re-arranging belts Y4 and Y5 and the roller Y6.

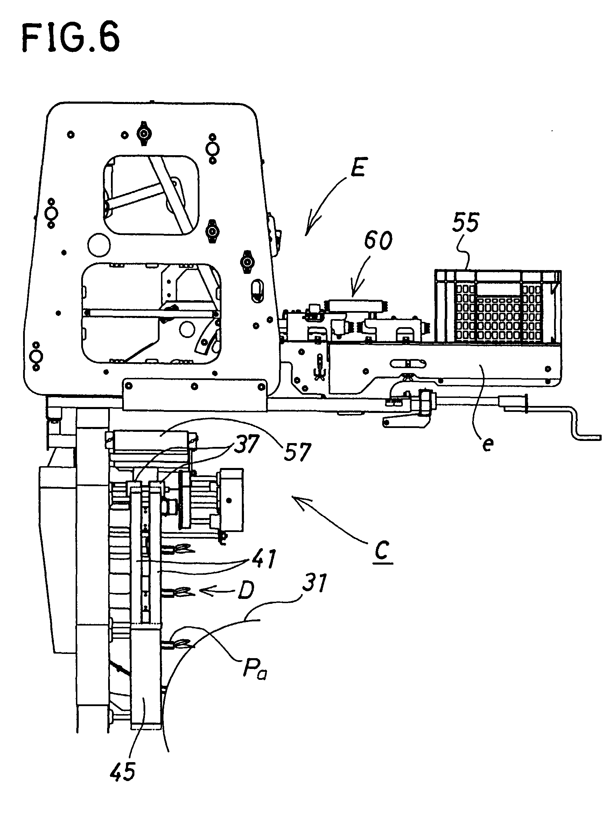

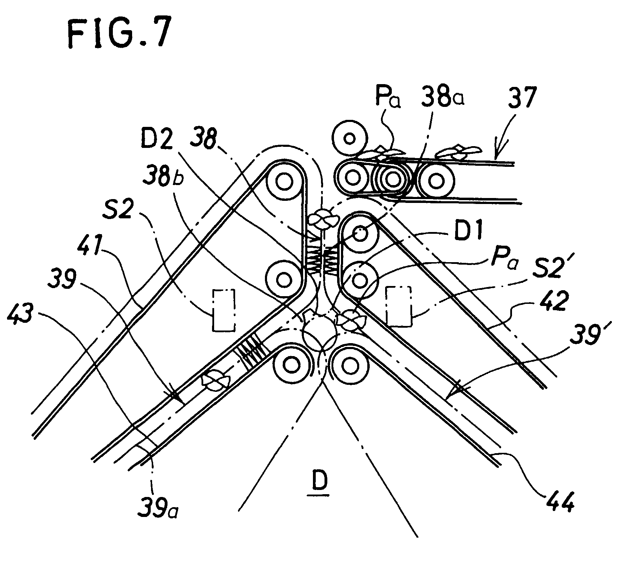

Subsequently, the distributing transferring mechanism 38, separately transferring mechanisms 39 and 39' and feeding transferring mechanisms 40 and 40' of the seedling distributing mechanism D will be described principally with reference to FIGS. 4 to 7.

The mechanisms 38, 39, 39', 40 and 40' mentioned above are constructed such that they are positioned substantially in a leftwardly and rightwardly symmetrical relationship and the center G2 of gravity of the seedling distributing mechanism D is positioned immediately above the support shaft member 24 by means of a pair of upper stage left and right belts 41 and 42 and a pair of lower stage left and right belts 43 and 44 extending between and around three shafts located at three points or apexes by which a predetermined triangle is defined and a pair of outer side left and right belts 45 and 46 located outwardly of the upper stage left and right belts 41 and 42 and the lower stage left and right belts 43 and 44, respectively, and extending between and around two upper and lower shafts.

The distributing transferring mechanism 38 detects a seedling Pa for transplantation transported along a central transfer path 38a formed from the upper stage left and right belts 41 and 42 by means of a pair of sensors S2 and S2' located on the opposite left and right sides of the central transfer path 38a, and pivots, in response to the seedling Pa for transplantation thus detected, a seedling distributing member 38b disposed at the transferring last end of the central transfer path 38a between a distributing position D1 at which the seedling Pa for transplantation is distributed to a left transfer path 39a and another distributing position D2 at which the seedling Pa for transplantation is distributed to a right transfer path 39'a so that seedlings Pa for transplantation which successively come to the seedling distributing member 38b are alternately distributed to the left and right transfer paths 39a and 39'a.

Referring to FIGS. 2 to 4, a collection shaft 47 extends through the support shaft member 24 and is operatively coupled at the front end thereof to the traction driving shaft 12 via a pair of gears 48 and 49 and at the rear end thereof to a power shaft 52 via another pair of gears 50 and 51.

The power shaft 52 drives the seedling distributing mechanism D via a predetermined transmission apparatus and drives the seedling planting wheels 31 and 31' of the left and right seedling planting mechanisms B and B'.

Subsequently, the seedling supply mechanism E will be described with reference to FIGS. 4, 5 and 8.

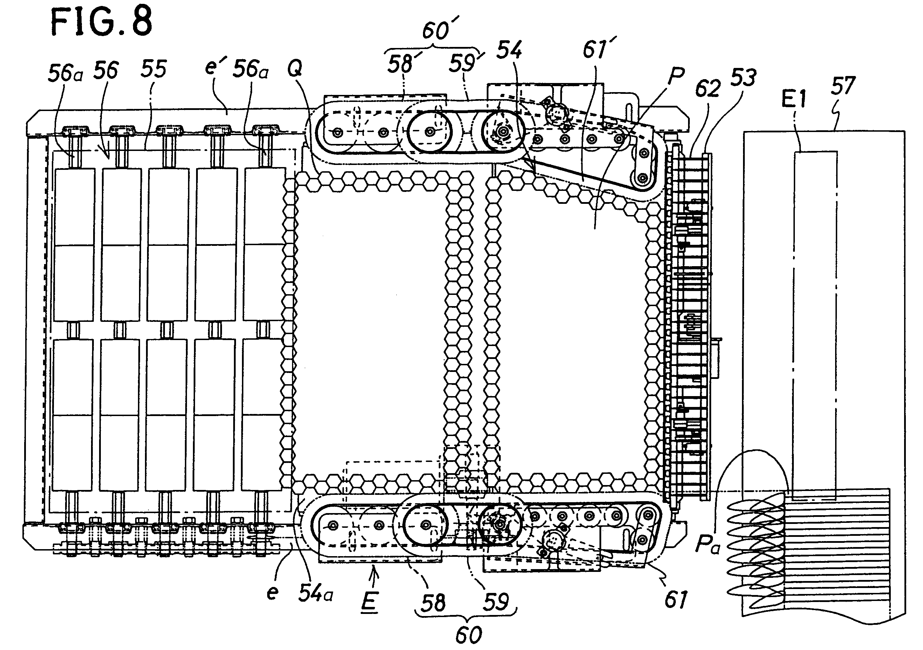

The seedling supply mechanism E includes ① a seedling row separating member 53 for separating a frontmost or first seedling row from a connected seedling group P, ② a supply conveyor 54 for supplying such connected seedling group P to the seedling row separating member 53, ③ a receiving conveyor 56 for receiving a connected seedling group Q, which follows the connected seedling group P, in a condition accommodated in a seedling carrying case 55, and ④ a transport conveyor 57 for transporting a seedling row separated by the seedling row separating member 53 toward the seedling receiving mechanism 37 of the seedling distributing mechanism D. The seedling row separating member 53, supply conveyor 54, receiving conveyor 56 and transport conveyor 57 are arranged suitably between a pair of left and right side frames e and e' as seen in FIG. 8.

The receiving conveyor 56 includes five rollers 56a disposed in a predetermined spaced relationship from each other. The rollers 56a rotate all together in the same direction. Meanwhile, the supply conveyor 54 includes a belt 54a supported on a pair of front and rear shafts.

A pair of guide members 60 and 60' are provided in a leftwardly and rightwardly symmetrical relationship on the opposite left and right sides of the belt 54a, respectively. The guide members 60 and 60' include guide belts 58, 58' and 59, 59' supported on two front and rear shafts such that they resiliently contact with seedlings at the opposite left and right outer side ends of the connected seedling group P carried on the belt 54a. The guide members 60 and 60' include length measuring arms 61 and 61' for measuring the length of the frontmost seedling row.

The seedling row separating member 53 includes a large number of seedling separating needles 62 each in the form of a needle curved such that it has a C-shaped side elevation. The seedling separating needles 62 are pierced into seedlings of the frontmost seedling row of the connected seedling group P and separate them from the connected seedling group P, and then move the thus separated seedling row to a releasing position E1 above the transport conveyor 57 and release them to drop onto the transport conveyor 57.

Besides, the seedling row separating member 53, supply conveyor 54, receiving conveyor 56, guide members 60 and 60' and other associated members are arranged such that the center G1 of gravity of the releasing position E1 may be positioned immediately above the support shaft member 24.

In this manner, the planting unit C is mounted on the movable frame A in a condition wherein the centers G1 and G2 of gravity of the seedling supply mechanism E and the seedling distributing mechanism D are positioned immediately above the support shaft member 24. Consequently, equal loads are apparently applied to the pairs of pressing down wheels 32 and 32' disposed in a leftwardly and rightwardly symmetrical relationship on the opposite sides of the seedling planting wheels 31 and 31', respectively.

The connected seedling group P on the belt 54a of the seedling supply mechanism E is moved toward the seedling row separating member 53 in a condition wherein they are resiliently supported at the opposite left and right outer side ends thereof by the guide members 60 and 60', respectively, and the length of the frontmost seedling row is measured by the length measuring arms 61 and 61'. Thereafter, the frontmost seedling row of the P is separated by the seedling separating needles 62 from the connected seedling group P and released onto the transport conveyor 57.

The seedling row released on the transport conveyor 57 is separated into individual seedlings Pa for transplantation by a separating roller 63 disposed at the last end of the transport conveyor 57. The seedlings Pa for transplantation are then held between and transported by an outwardly transporting inclined portion 57a and an opposing holding belt 57b of the transport conveyor 57 and then transferred to the seedling selecting variable transport speed section X of the seedling receiving mechanism 37, that is, to the root part supporting belt X4, leaf part supporting belt X6 and belt X2, by a guide roller 57c.

The thus transferred seedlings Pa for transplantation are selected by the seedling selecting variable transport speed section X as described above, and defective seedlings Pa' are abandoned to the outside of the multiple furrow seedling transplanting machine while only good seedlings are supplied to the seedling planting wheels 31 and 31' of the seedling planting mechanisms B and B' via the seedling distributing mechanism D so that they are successively planted into furrows formed by the openers 30 and 30'.

Besides, in this instance, since the centers G1 and G2 of gravity of the planting unit C are positioned immediately above the support shaft member 24, equal pressing down forces are exerted with the pressing down wheels 32 and 32' of the seedling planting mechanisms B and B', and consequently, the seedlings Pa for transplantation can be planted uprightly in the furrows.

It is to be noted that, since the planting unit C is mounted for leftward and rightward pivotal motion around the support shaft member 24 as described hereinabove, if only one of the left and right seedling planting mechanisms B and B' detects a convex or a concave of the object field, then the planting unit C is tilted leftwardly or rightwardly following the convex or concave.

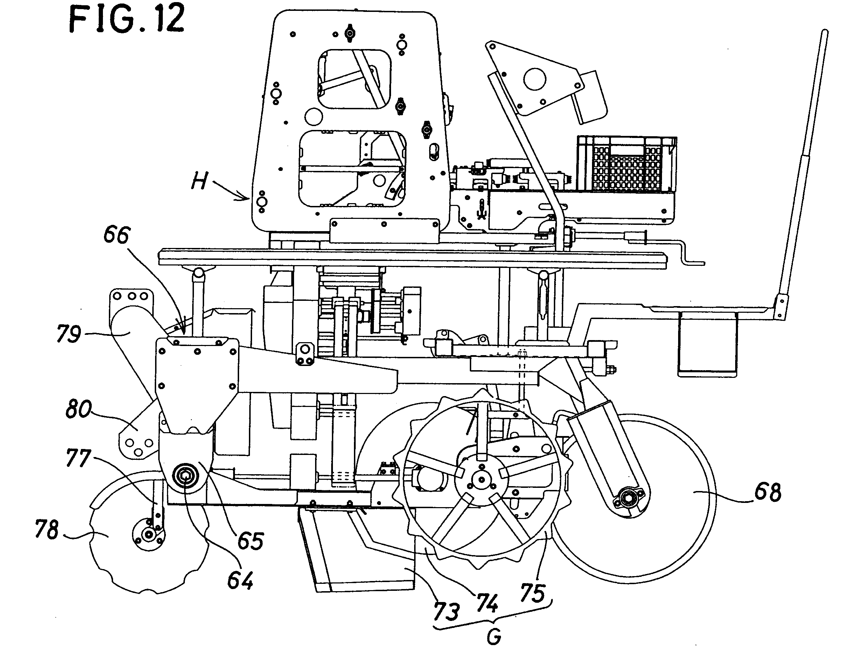

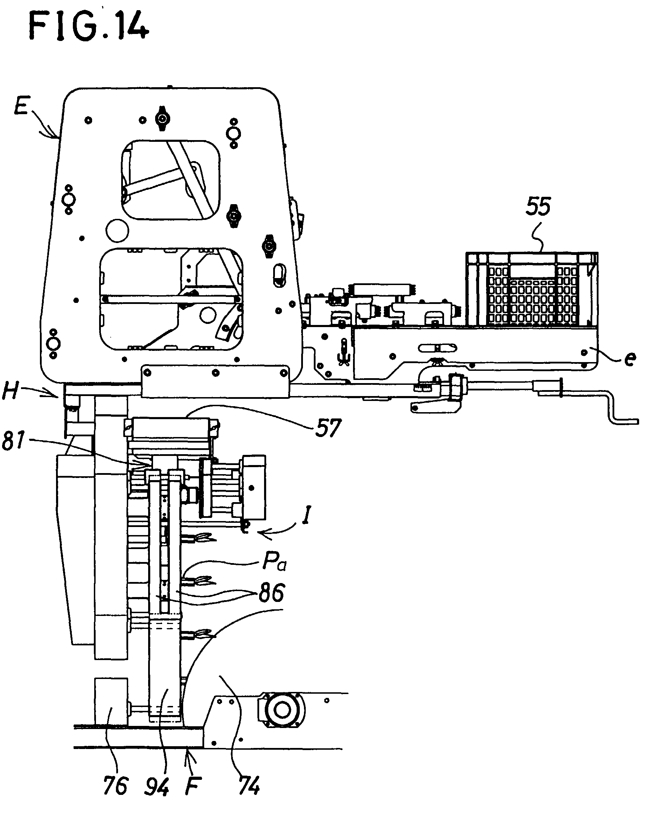

Referring now to FIGS. 12 to 16, there is shown another multiple furrow seedling transplanting machine to which the present invention is applied.

As described above, the multiple furrow seedling transplanting machine of the first embodiment is constructed such that the single movable frame A is mounted for upward and downward pivotal motion around the traction driving shaft 12 of the transplanting machine body frame 14 and for leftward and rightward pivotal motion around the support shaft member 24 and besides the seedling planting mechanisms B and B', seedling supply mechanism E and seedling distributing mechanism D, that is, the entire planting unit C, is mounted on the movable frame A.

In contrast, in the multiple furrow seedling transplanting machine of the present second embodiment of the present invention, a pair of movable frames F and F' are coupled only for upward and downward pivotal motion independently of each other to a traction driving shaft 64 supported horizontally on a transplanting machine body frame 66 while leftward and pivotal motion thereof is inhibited, and a seedling supply mechanism E and a seedling distributing mechanism I are mounted on the transplanting machine body frame 66 but not on the movable frames F and F'.

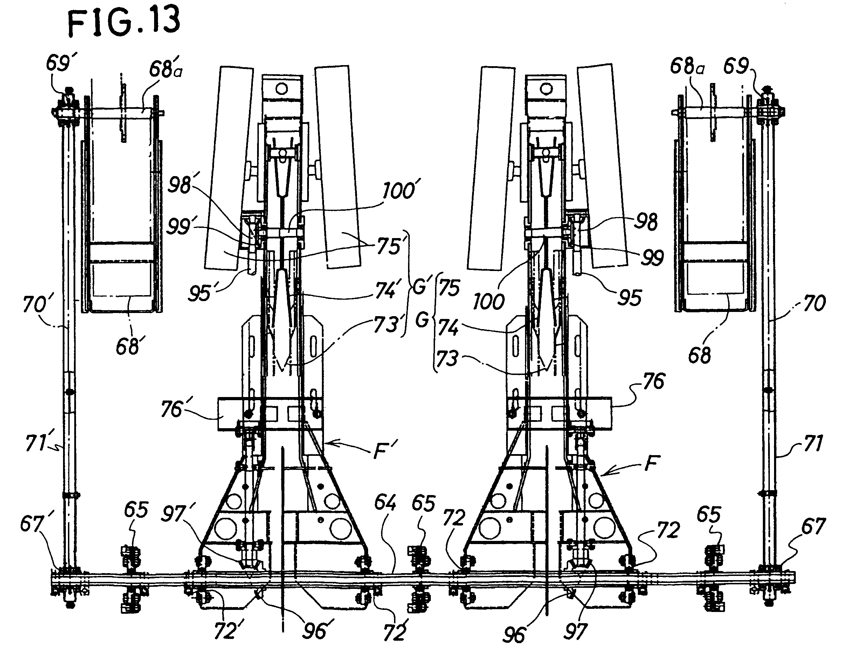

The traction driving shaft 64 is mounted horizontally in a suspended condition on the transplanting machine body frame 66 by means of brackets 65 disposed at a central location and locations adjacent the opposite left and right outer side ends of the traction driving shaft 64. A pair of sprocket wheels 67 and 67' are secured to the opposite left and right outer end portions of the traction driving shaft 64 as seen in FIG. 13.

A pair of chains 70 and 70' extend between and around the sprocket wheels 67 and 67' and another pair of sprocket wheels 69 and 69' secured to drive shafts 68a and 68a' of driving wheels 68 and 68' located rearwardly so that driving forces of the driving wheels 68 and 68' may be transmitted to rotate the traction driving shaft 64, respectively. A pair of chain cases 71 and 71' cover and protect the chains 70 and 70', respectively.

The movable frames F and F' are located in a leftwardly and rightwardly symmetrical relationship with respect to the traction driving shaft 64 and are operatively coupled at the front ends thereof for individual upward and downward pivotal motion to the traction driving shaft 64 by bearings 72 and 72'.

A pair of seedling planting mechanisms G and G' are provided on the movable frames F and F', respectively. The seedling planting mechanisms G and G' include openers 73 and 73' located on the center lines of the movable frames F and F', seedling planting wheels 74 and 74', and pressing down wheels 75 and 75', respectively. The openers 73 and 73', seedling planting wheels 74 and 74' and pressing down wheels 75 and 75' are successively mounted from the front side to the rear side of the movable frames F and F', respectively. The pressing down wheels 75 and 75' are arranged in a leftwardly and rightwardly symmetrical relationship on the opposite sides of the seedling planting wheels 74 and 74', respectively, such that equal pressing down forces may be applied from them.

Further, a pair of mounting tables 76 and 76' are provided on the movable frames F and F' on the front side of the seedling planting mechanisms G and G', respectively.

A roller coulter 78 is mounted in a suspended condition on the transplanting machine body frame 66 and supported for rotation on a support leg 77. Further, a pair of connecting members 79 and 80 for connecting the multiple furrow seedling transplanting machine to a traction car such as a tractor are provided on the transplanting machine body frame 66 as seen in FIG. 12.

When the multiple furrow seedling transplanting machine is drawn by a traction car, if the seedling planting mechanism G or G' detects a convex or concave of an object field, then the movable frame F or F' is pivoted upwardly or downwardly around the traction driving shaft 64 independently of each other in accordance with the convex or concave of the object field.

The seedling distributing mechanism I is mounted on the transplanting machine body frame 66, and the seedling supply mechanism E is mounted in an integrated relationship above the seedling distributing mechanism I.

Thus, a planting unit H is formed from the seedling distributing mechanism I, seedling supply mechanism E and seedling planting mechanisms G and G'.

It is to be noted that the seedling supply mechanism E has the same construction as that of the seedling supply mechanism E of the multiple furrow seedling transplanting machine of the first embodiment described hereinabove, and overlapping description thereof is omitted here to avoid redundancy.

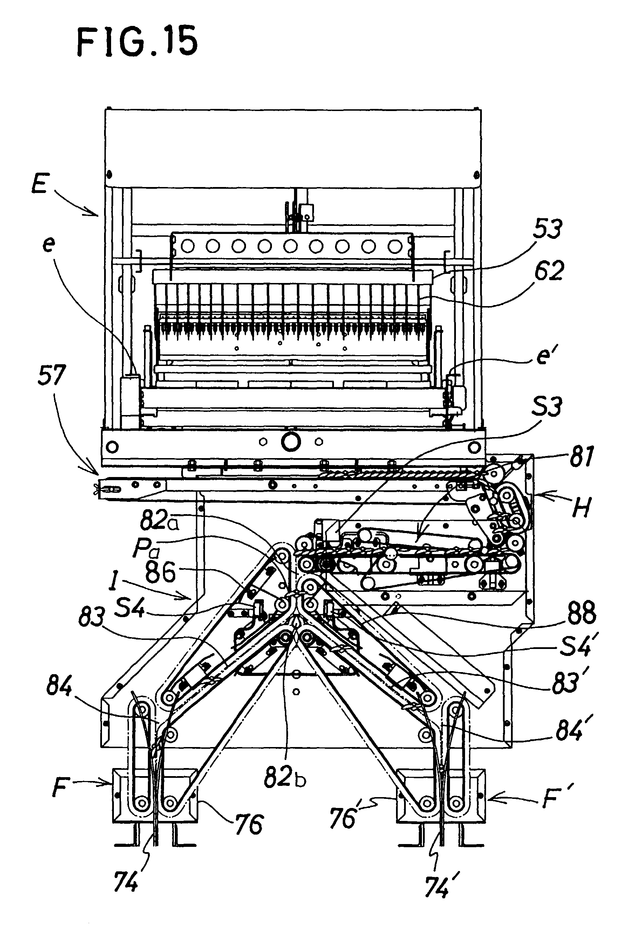

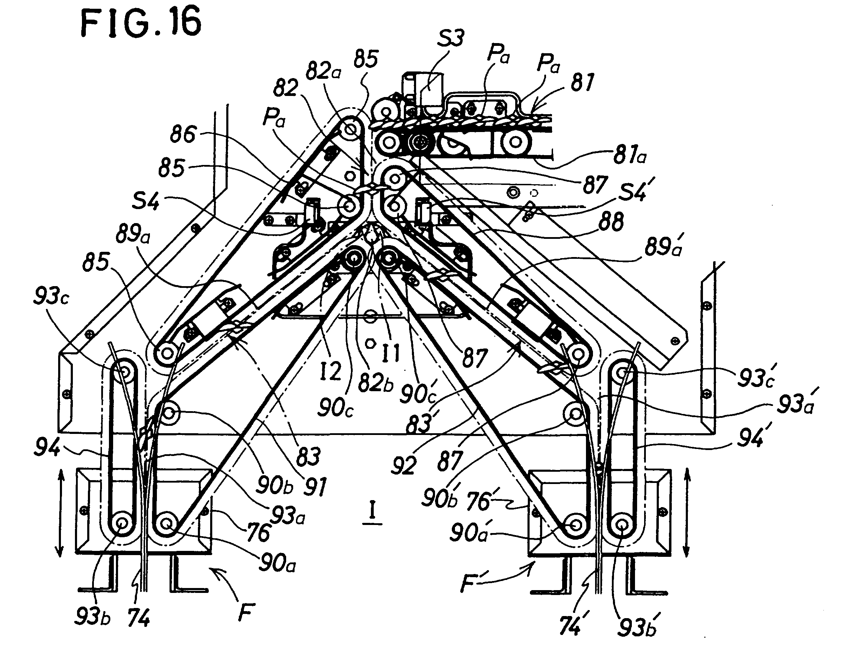

Referring particularly to FIGS. 15 and 16, the seedling distributing mechanism I includes ① a seedling receiving mechanism 81, ② a distributing transferring mechanism 82 for distributing seedlings Pa for transplantation fed from the seedling receiving mechanism 81 leftwardly and rightwardly, ③ a pair of separately transferring mechanisms 83 and 83' for transferring the thus distributed seedlings Pa for transplantation separately, and ④ a pair of feeding transferring mechanisms 84 and 84' for feeding the thus transferred seedlings Pa for transplantation to the seedling planting wheels 74 and 74' of the seedling planting mechanisms G and G', respectively.

The seedling receiving mechanism 81 has a same construction as the seedling receiving mechanism 37 of the multiple furrow seedling transplanting machine of the first embodiment described hereinabove with reference to FIGS. 9 to 11. Therefore, overlapping description of the seedling receiving mechanism 81 is omitted here to avoid redundancy. It is to be noted, however, that a sensor S3 shown in FIGS. 15 and 16 corresponds to the sensor S1 of the multiple furrow seedling transplanting machine of the first embodiment.

The distributing transferring mechanism 82 includes an upper stage left belt 86 extending between and around three supporting rollers 85 located at three points or apexes by which a predetermined triangle is defined, and an upper stage right belt 88 extending between and around three supporting rollers 87 similarly. The distributing transferring mechanism 82 is formed in a substantially leftwardly and rightwardly symmetrical relationship with a central transfer path 82a thereof positioned above and between the pair of movable frames F and F'.

The distributing transferring mechanism 82 detects a seedling Pa for transplantation transported along the central transfer path 82a by means of a pair of sensors S4 and S4' located on the opposite left and right sides of the central transfer path 82a, and pivots, in response to the seedling Pa for transplantation thus detected, a seedling distributing member 82b disposed at the transferring last end of the central transfer path 82a between a distributing position I1 at which the seedlings P for transplantation is distributed to a left transfer path 89a and another distributing position I2 at which the seedling Pa for transplantation is distributed to another right transfer path 89'a so that seedlings Pa for transplantation which successively come to the seedling distributing member 82b are alternately distributed to the left and right transfer paths 89a and 89'a as seen in FIG. 16.

The left transfer path 89a is formed from the upper stage left belt 86 and an expansible lower stage left belt 91 which extends between and around three supporting rollers disposed at three points or apexes by which a predetermined triangle is defined, that is, a supporting roller 90a mounted for rotation on the mounting table 76 of the movable frame F and a pair of supporting rollers 90b and 90c located on the transplanting machine body frame 66.

The right transfer path 89'a is formed from the upper stage right belt 88 and an expansible lower stage right belt 92 which extends between and around three supporting rollers disposed at three points or apexes by which a predetermined triangle is defined, that is, a supporting roller 90'a mounted for rotation on the mounting table 76' of the movable frame F' and a pair of supporting rollers 90'b and 90'c located on the transplanting machine body frame 66.

An expansible outer side left belt 94 is located outwardly of the lower stage left belt 91 such that an outer side transfer path 93a may be defined between the outer side left belt 94 and the lower stage left belt 91. The outer side left belt 94 extends between and around a supporting roller 93b mounted for rotation on the mounting table 76 of the movable frame F and another supporting roller 93c located on the transplanting machine body frame 66.

An expansible outer side right belt 94' is located outwardly of the lower stage right belt 92 such that an outer side transfer path 93'a may be defined between the outer side right belt 94' and the lower stage right belt 92. The outer side right belt 94' extends between and around a supporting roller 93'b mounted for rotation on the mounting table 76' of the movable frame F' and another supporting roller 93'c located on the transplanting machine body frame 66.

As apparent from the foregoing description, even if the movable frame F or F' is pivoted upwardly or downwardly around the traction driving shaft 64 in accordance with a convex or a concave of an object field, the lower stage left and right belts 91 and 92 and the outer side left and right belts 94 and 94' which define the outer side transfer paths 93a and 93'a are expanded or contracted in accordance with the upward or downward motion of the movable frame F or F' while holding therebetween seedlings Pa for transplantation which are being transported therealong. Accordingly, the seedlings Pa for transplantation can be supplied smoothly to the seedling planting wheels 74 and 74'.

A pair of connection shafts 95 and 95' are provided on the movable frames F and F', respectively, and are operatively coupled at the front ends thereof to the traction driving shaft 64 via gears 96, 97 and 96', 97' and at the rear ends thereof to a pair of power shafts 100 and 100' via gears 98, 99 and 98', 99', respectively, as seen in FIG. 13.

The power shafts 100 and 100' drive the seedling distributing mechanism I via a predetermined transmission apparatus, and drive the seedling planting wheels 74 and 74' of the left and right seedling planting mechanisms G and G', respectively.

A seedling row released on the transport conveyor 57 of the seedling supply mechanism E is separated into individual seedlings Pa for transplantation by the separating roller 63 and then transferred to the seedling receiving mechanism 81.

The seedlings Pa for transplantation transferred to the seedling receiving mechanism 81 are selected by the seedling selecting variable transport speed section X, and defective seedlings Pa' are abandoned to the outside of the multiple furrow seedling transplanting machine while only good seedlings are supplied to the seedling planting wheels 74 and 74' of the seedling planting mechanisms G and G' via the seedling distributing mechanism I so that they are planted to furrows formed by the openers 73 and 73'.

Besides, in this instance, since the seedling planting mechanisms G and G' are constructed in a leftwardly and rightwardly symmetrical relationship with respect to the movable frames F and F', equal pressing down forces are applied to the opposite side pressing down wheels 75 and 75', and a seedling Pa for transplantation can be planted in an upright condition in a furrow.

In the multiple furrow seedling transplanting machine of the second embodiment, since particularly the seedling supply mechanism E described hereinabove is mounted in an integrated relationship above the seedling distributing mechanism I and they are mounted on the transplanting machine body frame 66, the load of the seedling supply mechanism E and the seedling distributing mechanism I is not applied directly to the movable frames F and F'.

Accordingly, the installation of the seedling supply mechanism E and the seedling distributing mechanism I does not have an influence upon the balance of pressing down forces exerted by the pressing down wheels 75 and 75' of the seedling planting mechanisms G and G'.

It is to be noted that the present invention is not limited to the specific embodiments described hereinabove, and they can be modified in various forms within the spirit and scope of the present invention.

For example, the multiple furrow seedling transplanting machine of the first embodiment described above is constructed as a seedling transplanting machine for two furrows which includes a single planting unit which in turn includes a pair of seedling planting mechanisms. However, the multiple furrow seedling transplanting machine may be modified such that a plurality of support shaft members are provided and a movable frame is operatively coupled to each of the support shaft members while such a planting unit as described above is mounted on each of the movable frames.

Further, while, in the multiple furrow seedling transplanting machine of the first embodiment, the center of gravity of the seedling supply mechanism and the center of gravity of the seedling distributing mechanism are positioned immediately above the support shaft member, the two mechanisms may be arranged alternatively such that the center of gravity of the seedling supply mechanism and the center of gravity of the seedling distributing mechanism are positioned on the opposite sides of the support shaft member in such a manner that turning forces caused by the mechanisms and acting on the support shaft member may cancel each other.

Furthermore, while the seedling supply mechanism in the multiple furrow seedling transplanting machines of the first and second embodiments separates a connected seedling group, in which seedlings for transplantation are connected to each other, into individual seedling rows and feeds the seedling rows toward the seedling planting mechanism, it may otherwise be constructed such that it separates a connected seedling group, in which seedlings for transplantation are connected to each other, into individual seedlings for transplantation in advance and feeds the thus separated seedlings for transplantation toward the seedling distributing mechanism.

In addition, while, in the multiple furrow seedling transplanting machine of the second embodiment, two movable frames are operatively coupled for upward and downward pivotal motion independently of each other to the traction driving rod mounted horizontally on the transplanting machine body frame, three or more movable frames may otherwise be operatively coupled for upward and downward pivotal motion independently of each other to the traction driving rod.

Having now fully described the invention, it will be apparent to one of ordinary skill in the art that many changes and modifications can be made thereto without departing from the spirit and scope of the invention as set forth herein.

## Claims

1. A multiple furrow transplanting method for seedlings for transplantation, characterized in that
seedlings (Pa) for transplantation received by a single seedling receiving mechanism (37) are transported toward a distributing transferring mechanism (38), and during the transportation, the seedlings (Pa) for transplantation are detected by a sensor (S2, S2') serving as detection means and a distributing member (38b) is controlled in response to the detection so that the seedlings (Pa) for transplantation are distributed by said distributing member (38b) and fed separately to a pair of seedling planting mechanisms (B, B'), by which the seedlings (Pa) for transplantation are planted to corresponding furrows.

2. A multiple furrow transplanting method for seedlings for transplantation, characterized in that
seedlings (Pa) for transplantation received by a single seedling receiving mechanism (37) are selectively separated into good seedlings and defective seedlings and only the good seedlings are transported toward a distributing transferring mechanism (38), and during the transportation, the good seedlings for transplantation are detected by a sensor (S2, S2') serving as detection means and a distributing member (38b) is controlled in response to the detection so that the good seedlings for transplantation are distributed by said distributing member (38b) and fed separately to a pair of seedling planting mechanisms (B, B'), by which the good seedlings for transplantation are planted to corresponding furrows.

3. A multiple furrow transplanting method for seedlings for transplantation as set forth in claim 1 or 2, characterized in that the seedlings (Pa) for transplantation are transported to said distributing transferring mechanism (38) through a seedling selecting variable transport speed section (X) and a seedling contacting constant transport speed section (Y) of said seedling receiving mechanism (37), in which the seedlings (Pa) for transplantation are selectively separated into good seedlings and defective seedlings by said seedling selecting variable transport speed section (X) and then the crowding degree of the seedlings (Pa) for transplantation in said seedling contacting constant transport speed section (Y) is adjusted so as to be normally fixed by controlling the transport speed of the seedlings (Pa) for transplantation in said seedling selecting variable transport speed section (X).

4. A multiple furrow seedling transplanting machine, characterized in that it comprises a single seedling receiving mechanism (37), a pair of seedling planting mechanisms (B, B'), a distributing transferring mechanism (38) interposed between said seedling receiving mechanism (37) and said seedling planting mechanisms (B, B'), a distributing member (38b) for selectively distributing the seedlings (Pa) for transplantation being transported by said distributing transferring mechanism (38) to said seedling planting mechanisms (B, B'), and a sensor (S2, S2') serving as detection means for detecting the seedlings (Pa) for transplantation being transported by said distributing transferring mechanism (38) to control said distributing member (38b).

5. A multiple furrow seedling transplanting machine, characterized in that said seedling receiving mechanism (37) has a function of selectively separating the seedlings (Pa) for transplantation into good seedlings and defective seedlings.

6. A multiple furrow seedling transplanting machine as set forth in claim 5, characterized in that said seedling receiving mechanism (37) includes a seedling selecting variable transport speed section (X) having a function of selectively separating the seedlings (Pa) for transplantation into good seedlings and defective seedlings, and a seedling contacting constant transport speed section (Y).

7. A multiple furrow seedling transplanting machine as set forth in claim 4, 5 or 6, characterized in that said seedling receiving mechanism (37) includes a seedling supply mechanism (E) for supplying seedlings (Pa) for transplantation.

8. A multiple furrow seedling transplanting machine as set forth in claim 4, 5 or 6, characterized in that said seedling receiving mechanism (37) and said distributing transferring mechanism (38) are disposed such that the centers of gravity thereof are positioned in the middle between said seedling planting mechanisms (B, B').

9. A multiple furrow seedling transplanting machine as set forth in claim 7, characterized in that said seedling receiving mechanism (37), said seedling transferring mechanism (38) and said seedling supply mechanism (E) are disposed such that the centers of gravity thereof are positioned in the middle between said seedling planting mechanisms (B, B').
